# EUROPÄISCHE PATENTSCHRIFT

(11) **EP 0 727 643 B1**
(45) Veröffentlichungstag und Bekanntmachung des Hinweises auf die Patenterteilung: **07.01.1999**
(21) Anmeldenummer: 96101079.0
(22) Anmeldetag: 25.01.1996
(51) Int. Cl.: G01D 3/028, G01D 5/14

(54) **Temperaturkompensierte Sensoranordnung und Verfahren zur Temperaturkompensation einer Sensoranordnung**
Temperature compensated sensor assembly and method for temperature compensation of a sensor assembly
Dispositif de compensation en température d'un capteur, et procédé de compensation en température d'un capteur

(30) Priorität: 14.02.1995 DE 19504871
(43) Veröffentlichungstag der Anmeldung: 21.08.1996
(73) Patentinhaber: SIEMENS AKTIENGESELLSCHAFT, 80333 München (DE)
(72) Erfinder: Draxelmayr, Dieter, Dr., A-9500 Villach (AT)

(56) Entgegenhaltungen:
- EP-A- 0 071 962
- EP-A- 0 611 951
- DE-A- 4 201 013
- ELEKTRONIK, Bd. 41, Nr. 17, 18.August 1992, MÜNCHEN,DE, Seiten 59-62, XP000310956 LEMME ET AL: "Hall-Sensoren in CMOS - billig und genau"

## Beschreibung

Die Erfindung betrifft eine Sensoranordnung, insbesondere eine Hall-Sensoranordnung, mit einem Sensorelement, dessen Signalausgang mit dem Eingang einer Verstärkerstufe verbunden, und mit einer Versorgungseinrichtung, die mit dem Sensorelement verblunden ist.

Eine möglichst exakte Erfassung verschiedener Zustandsgrößen spielt im technischen Bereich, beispielsweise für Kfz-Anwendungen, eine immer wichtiger werdende Rolle. Zum einen soll einem Verbraucher ein gesteigerter Komfort angeboten werden, zum anderen werden immer höhere technische Anforderungen gestellt, beispielsweise die Erfüllung von Verbrauchs- und Abgasnormen oder sicherheitsrelevante Anwendungen in der Automobiltechnik. Regelmäßig müssen physikalische oder chemische Größen mit Hilfe von Sensoren in elektrische Signale umgesetzt werden, die für eine Regelung oder Steuerung von Systemen bzw. Prozessen weiterverarbeitet werden können.

Die Sensoren als Bindeglied zwischen physikalischer oder chemischer Umgebung und elektrischer Signalverarbeitung unterliegen andererseits selbst physikalischen und chemischen Einflüssen. Hierzu zählen insbesondere Abhängigkeiten ihrer Eingenschaften hinsichtlich der Temperatur, des mechanischen Stresses und der elektrischen Robustheit. Hinzu kommen systembedingte Fehler, beispielsweise Timingfehler in digitalen Systemen. In dynamischen Systemen soll eine möglichst gute Trennung der dynamischen Meßsignale von statischen oder stationären Größen bzw. Meßsignalen erreicht werden.

Ein Beispiel für die vorstehend genannten Probleme ist die Erfassung von Position, Drehzahl oder Winkel bei mechanischen Teilen. Als Sensoren lassen sich vorteilhaft magnetische Geber oder Sensoren einsetzten. Hall-Sensoren, die den Hall-Effekt ausnützen, haben aufgrund ihrer Genauigkeit und Zuverlässigkeit bei der Erfassung mechanischer Größen eine besondere Bedeutung erlangt. Stark zunehmend werden integrierte Hall-Sensoren eingesetzt, wie sie beispielsweise in den Veröffentlichungen K. Fischer: Dynamische Differenz-Hall-ICs erfassen Drehzahl, Position und Winkel, Components 30, 1992, H. 3, Seite 91 bis 95 und P. Schiefer: Hall-Effekt-Sensoren zur Positions- und Drehzahlerkennung, Automobilprofessional 2/92, Seite 42 bis 45 bekannt geworden sind.

Aus der EP-A-0 548 391 ist ein integrierbarer Hall-Sensor bekannt, der eine Offset-Kompensation hinsichtlich parasitärer mechanischer Streßfaktoren, insbesondere des Piezoeffekts, aufweist. In den vorgenannten Veröffentlichungen umfaßt die Sensoranordnung ein erstes und zweites Sensorelement, deren Ausgangssignale mit einer Differenzeinrichtung weiter verarbeitet werden.

Temperaturänderungen sollen das Systemverhalten der Sensoranordnungen möglichst wenig ändern. Gewünscht sind entweder eine konstante Schwellenlage der Transistoren oder die Kompensation des Temperaturgangs eines bestimmten Werkstoffs, insbesondere des Materials des Sensorelements. Ganz besonders wichtig ist dabei der Hochtemperaturbereich. Beispielsweise kann in einem Kraftfahrzeug die Umgebungstemperatur relativ hoch sein, während auf der anderen Seite die Sensoranordnungen üblicherweise als Schutz gegen äußere Einflüsse umspritzt sind. Das führt zu einem erhöhten thermischen Widerstand. Darüber hinaus treten bei integrierten Sensoranordnungen aus Silizium bei hohen. Temperaturen vermehrt Leckströme auf, und Alterungseffekte werden beschleunigt.

Üblicherweise wird bislang eine Temperaturkompensation erreicht, in dem verschiedene Parameter einer Sensoranordnung geändert werden, bis sich der gewünschte Temperaturgang ergibt. Dies ist einerseits zeitraubend und andererseits anfällig gegen über Fertigungsstreuungen.

Weitere Vorschläge zur Temperaturkompensation von Sensoranordnungen sind in folgenden Druckschriften beschrieben: Aus EP 0 071 962 A1 ist eine Schaltungsanordnung zur Übertragung eines Drucksensorsignals bekannt, bei der ein Drucksensor mit dem Ausgang einer Stromquelle verbunden ist. Die Stromquelle wird mittels einer Rückkopplungs-Steuerspannung, die von einem nichtlinearen Rückkopplungsschaltkreis erzeugt wird, gesteuert, wodurch eine Temperaturkompensation des Sensors erreicht wird.

Aus EP 0 611 951 A2 ist ein temperaturkompensierter Verstärkerschaltkreis für ein Hall-Effekt-Bauelement bekannt, bei dem die Temperaturabhängigkeit einer Verstärkerstufe im Wesentlichen mittels eines Widerstandes mit positivem Temperaturkoeffizienten (PTC) kompensiert wird.

Aus Elektronik, Bd. 41, Nr. 17, 18. August, Seiten 59-62 sind Hallsensoren in CMOS-Techologie bekannt, die mittels monolithischer Fertigung aus Silizium intern temperaturkompensiert sind.

Aus DE 42 01 013 A1 ist eine Einrichtung zur Lageerkennung eines rotierenden Werkzeugs bekannt, bei dem ein Signal einer separaten Temperaturkompensationsschaltung und ein temperaturabhängiges Signal eines Hall-Effekt-Sensors einem Differenzverstärker zugeführt werden.

Der Erfindung liegt die Aufgabe zugrunde, eine verbesserte temperaturkompensierte Sensoranordnung und ein einfacheres Verfahren zur Temperaturkompensation einer Sensoranordnung anzugeben.

Diese Aufgabe löst die Erfindung durch die Merkmale der Patentansprüche 1 und 9.

Die Erfindung hat den Vorteil, daß die Gesamtanordnung temperaturkompensiert ist, obwohl einzelne Elemente der Gesamtanordnung einen Temperaturgang haben.

Ausgestaltungen der Erfindung sind in abhängigen Ansprüchen gekennzeichnet.

Die Erfindung wird nachfolgend anhand von in den FIG der Zeichnung dargestellten Ausführungsbeispielen näher erläutert.

Es zeigen:
FIG 1 ein Prinzipschaltbild zur Erläuterung der Erfindung,
FIG 2 ein Prinzipschaltbild zur Erläuterung der Erzeugung einer von der absoluten Temperatur abhängigen Versorgungsgröße für ein Sensorelement und
FIG 3 ein Prinzipschaltbild zur Erläuterung der Erzeugung eines Vergleichssignals mit gleichem Temperaturgang wie das Sensorsignal.

Die Erfindung wird anhand eines Hall-Sensors erläutert, welcher den Hall-Effekt zur Messung magnetischer Feldgrößen ausnutzt. Es ist jedoch ohne weiteres einsichtig, daß die Erfindung auch mit Hilfe anderer Sensorelemente realisierbar ist, die andere physikalische oder chemische Meßgrößen erfassen sollen.

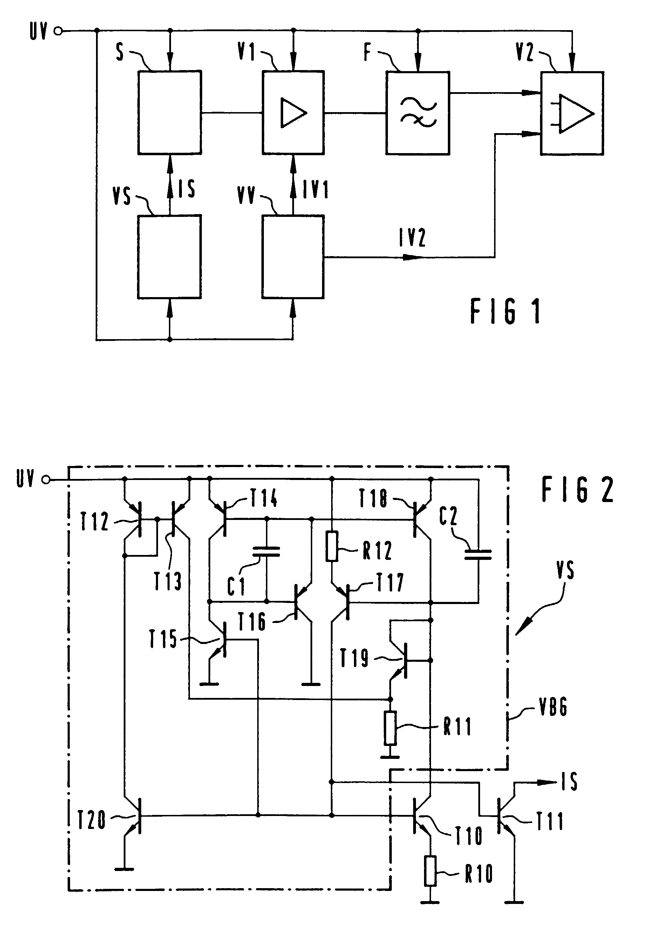

Gemäß FIG 1 umfaßt der Meßkreis das Sensorelement S, dessen Sensorsignal am Sensorausgang nacheinander eine Verstärkerstufe V1, ein Filter F und eine Verstärkerstufe V2 durchläuft. Der Sensor S kann ein einzelnes Sensorelement oder ein differentieller Sensor mit zwei Sensorelementen sein. V1 ist typischerweise ein Vorverstärker, der als OTA (Operational Transconductance Amplifier) ausgebildet sein kann. Möglich ist auch eine Differenzeinrichtung mit zwei Differenzverstärkern, die bei einem differentiellen Sensor jedem der Sensorelemente zugeordnet sind.

Der Ausgang der Verstärkerstufe V1 ist im Ausführungsbeispiel einpolig (single ended), er kann aber auch als komplementärer Ausgang ausgebildet sein. V1 nachgeschaltet ist das Filter F, das typischerweise als Hochpaßfilter ausgebildet ist, um eine zeitliche Mittelwertbildung zu erreichen. Dem Filter F nachgeschaltet ist die Verstärkerstufe V2, die als Komparator ausgebildet sein kann, der den Signalausgang des Sensorelements mit einer vorgegebenen Größe vergleicht. Die Anordnung der FIG 1 laßt sich damit sowohl für eine Einzel- als auch eine differentielle Sensoranordnung einsetzten.

Eine Versorgungseinrichtung VS erzeugt einen Strom IS, der in den Sensor S eingekoppelt wird. Entsprechend erzeugt eine zweite Versorgungseinrichtung VV einen Versorgungsstrom IV1 für die Verstärkerstufe V1 und ein Vergleichssignal IV2, das als Eingangssignal des Komparators der Verstärkerstufe V2 zum Vergleich mit dem Signal des Sensorausgangs vorgesehen ist. Die Spannungsversorgung der Anordnung gemäß FIG 1 erfolgt über eine Klemme UV, an der eine in FIG 1 nicht näher erläuterte stabilisierte Versorgungsspannung, beispielsweise eine Bandgap-Spannung anliegt, die den Vorteil einer definierten Temperaturabhängigkeit hat.

Die Verstärkerstufe V1 verarbeitet typischerweise das oder die Signale des Sensors derart, daß am Ausgang ein Signalpegel zur Verfügung steht, der für die elektrische Weiterverarbeitung des Sensorsignals ausreichend hoch ist. Das Filter F filtert statische oder stationäre Gleichsignalanteile des so erhaltenen aufbereiteten Sensorsignals aus. Der Verstärker V2 dient in seiner Ausbildung als Komparator als Hystereseverstärker, da für Sensoranordnungen in aller Regel eine vorgegebene Schaltschwelle zum Ein- oder Ausschalten vorgegeben ist, während andererseits das Aus- bzw. Einschalten mit einer vorgegebenen Hysterese erfolgen soll. Die Schaltschwellen bzw. die vorgegebene Hysterese wird typischerweise durch die physikalischen Größen vorgegeben, auf die das Sensorelement reagiert. Beispielsweise ist diese Größe bei einem Hallsensor ein Magnetfeld.

Gemäß der Erfindung werden nun die Komponenten Sensor S, und Verstärkerstufe V1 so aneinander angepaßt, daß sich die Temperaturabhängigkeiten des Sensors und Verstärkerstufe kompensieren.

Die Versorgungsspannung bzw. der Versorgungsstrom IS für das Sensorelement S wird so eingestellt, daß diese Versorgungsgröße proportional zur absoluten Temperatur ist. Das Ausgangssignal des Sensors S ist dann ebenfalls proportional zur absoluten Temperatur. Weiterhin ist das Ausgangssignal des Sensors S proportional zum Leitwert des verwendeten Sensormaterials und damit stark temperaturabhängig. Die nachfolgende Verstärkerstufe V1 wird so ausgebildet, daß ihre Steilheit invers proportional zur absoluten Temperatur ist. Damit wird zunächst die Temperaturabhängigkeit von der absoluten Temperatur von Sensorelement und Verstärkerstufe V1 kompensiert.

Das Ausgangssignal des Sensor S bzw. das Ausgangssignal des Filters F wird mit einem Referenzsignal verglichen, das von einem Widerstand aus dem gleichen Material wie dem Sensorelement abgeleitet wird. Bei einem Komparator zum Vergleich beider Signale kompensieren sich damit das widerstandsabhängige Vergleichssignal und das leitwertabhängige Sensorsignal aufgrund des gleichen verwendeten Materials. Somit wird die Gesamtanordnung temperaturkompensiert, ohne daß bei der Auslegung der einzelnen Elemente der Sensoranordnung eine konkrete Materialeigenschaft berücksichtigt werden muß.

FIG 2 zeigt in prinzipieller Darstellung die Versorgungseinrichtung VS, die als Versorgungsgröße für den Sensor S einen Sensorstrom IS erzeugt, der proportional zur absoluten Temperatur ist. Dazu dient eine Bandgap-Schaltung aus den Transistoren T10 und T11 sowie dem Widerstand R10, der im Emitterkreis des Transistors T10 liegt. Die Bandgap-Schaltung wird von einer Versorgungsschaltung VBG gespeist. Die Transistoren T10 und T11 werden mit unterschiedlichen Kollektorströmen betrieben, so daß sich am Widerstand R10 eine Spannung ergibt, die gleich der Differenz der Basis-Emitter-Spannungen der beiden Transistoren ist. Diese Spannungsdifferenz ist proportional zur absoluten Temperatur. Das Material des Widerstandes R10 ist gleich dem Material des Sensors zu wählen. Dann ist der Versorgungsstrom IS für den Sensor sowie das Ausgangssignal des Sensors proportional zur absoluten Temperatur, da der Widerstand R10 einen Temperaturgang proportional zur absoluten Temperatur hat. R10 kann beispielsweise als Pinch-Widerstand einer epitaktischen Schicht einer integrierten Sensoranordnung ausgebildet sein. Einzelheiten von Bandgap-Eigenschaften sind beispielsweise dem Lehrbuch von U. Tietze/Ch. Schenk: Halbleiter-Schaltungstechnik, Springer-Verlag, 2. oder 5. Auflage zu entnehmen.

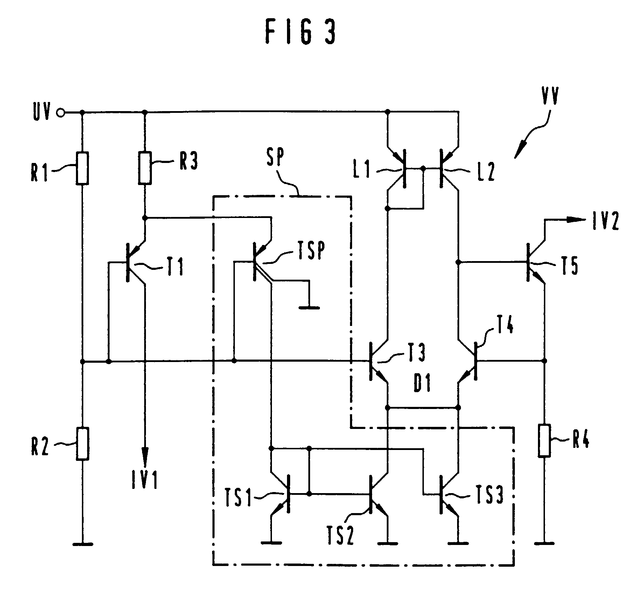

FIG 3 zeigt eine zweite Versorgungseinrichtung VV zur Erzeugung des Speisestroms IV1 für die Verstärkerstufe V1 und des Vergleichssignals IV2 für die Verstärkerstufe V2, das beispielsweise zur Einstellung der Hysterese verwendet werden kann. Aus der Versorgungsspannung an der Klemme UV wird mit Hilfe eines ohmschen Spannungsteilers die Basisspannung bzw. der Basisstrom für den Transistor T1 sowie für den Transistor T3 der Differenzstufe D1 aus den Transistoren T3 und T4 erzeugt. T1 ist als pnp-Transistor ausgebildet, dessen Emitter über einen Widerstand R3 mit der Klemme UV verbunden ist. Am Kollektor von T1 stellt sich der Strom IV1 für die Verstärkerstufe V1 ein. Der Strom IV1 kann entweder konstant sein oder mit einer gezielten Drift zum Ausgleich weiterer parasitärer Eigenschaften versehen sein. T1 und R3 bilden eine Emitterschaltung mit Stromgegenkopplung, deren Steilheit invers proportional zur absoluten Temperatur ist (vgl. Tietze/Schenk, a.a.O.). Der so erzeugte Speisestrom für die Verstärkerstufe V1 bewirkt eine Temperaturabhängigkeit von V1, die invers proportional zur absoluten Temperatur ist.

Die Differenzstufe D1 wird von einer Stromquelle SP in Stromspiegelanordnung gespeist, die zunächst mit einem zu T1 parallel geschalteten Transistor TSP einen Strom erzeugt, der mit der Stromspiegelanordnung aus TS1, TS2 und TS3 in die miteinander verbundenen Emitter der Transistoren T3 und T4 eingespeist wird. Lastelemente der Transistoren T3 und T4 bilden die Transistoren L1 und L2, die basis- und emitterseitig miteinander verbunden sind und an der Klemme UV angeschlossen sind. Dem Ausgang von T4 ist wiederum eine Emitterschaltung mit Stromgegenkopplung aus den Elementen T5 und R4 nachgeschaltet. T4 wird vom Verbindungspunkt des Emitters von T5 mit dem Widerstand T4 angesteuert. Am Kollektor von T5 ist der Strom IV2 abgreifbar, der als Vergleichssignal für das weiterverarbeitete Sensorausgangssignal dient. Der Widerstand R4 ist in ähnlicher Weise wie der Widerstand R10 aus dem Material des Sensorelements, d.h. aus dem Hall-Material, beispielsweise mit Hilfe eines Pinch-Widerstands einer epitaktischen Schicht einer Halbleiteranordnung erzeugt. Aufgrund der gleichen Temperaturabhängigkeit des Widerstands R4 und des Sensormaterials kompensieren sich die materialabhängigen Temperatureinflüsse, wenn das Sensorausgangssignal mit dem Signalausgang IV2 der Versorgungseinrichtung VV in der Verstärkerstufe V2 vergleichen wird.

## Patentansprüche

1. Sensoranordnung, insbesondere Hall-Sensoranordnung, mit einem Sensorelement, dessen Signalausgang mit dem Eingang einer Verstärkerstufe verbunden ist, und mit einer Versorgungseinrichtung, die mit dem Sensorelement verbunden
ist, **dadurch gekennzeichnet,**
daß die Versorgungseinrichtung (VS) das Sensorelement (S) mit einer Versorgungsgröße (IS) speist, die proportional zu einer vorgegebenen Temperatur ist, und daß die Steilheit der Verstärkerstufe (V1) invers proportional zu der vorgegebenen Temperatur ist.

2. Anordnung nach Anspruch 1,
**dadurch gekennzeichnet,**
daß als vorgegebene Temperatur die absolute Temperatur gewählt ist.

3. Anordnung nach Anspruch 1 oder 2,
**dadurch gekennzeichnet,**
daß die Versorgungsgröße (IS) des Sensorelements (S) ein Versorgungsstrom ist, dessen Temperaturverhalten von der absoluten Temperatur abhängt.

4. Anordnung nach einem der Ansprüche 1 bis 3,
**dadurch gekennzeichnet,**
daß die Versorgungseinrichtung (VS) einen Bandgap-Schaltung enthält.

5. Anordnung nach Anspruch 4,
**dadurch gekennzeichnet,**
daß die Bandgap-Schaltung (T10, T11, R10) einen Widerstand (R10) aus dem Material des Sensorelements enthält.

6. Sensoranordnung nach einem der Ansprüche 1 bis 5,
**dadurch gekennzeichnet,**
daß das Sensorsignal am Signalausgang des Sensorelements mit einem Vergleichssignal (IV2) verglichen wird, das die gleiche Temperaturabhängigkeit wie das Sensorsignal hat.

7. Anordnung nach Anspruch 6,
**dadurch gekennzeichnet,**
daß das Vergleichssignal (IV2) mittels einer Verstärkerstufe (D1, T5, R4) erzeugt wird, die als temperaturbestimmendes Element einen Widerstand (R4) aus dem Material des Sensorelements enthält.

8. Anordnung nach Anspruch 6 oder 7,
**dadurch gekennzeichnet,**
daß das Vergleichssignal mit Hilfe eines Operationsverstärkers (D1, SP, L1, L2) und einer nachgeschalteten Emitterschaltung mit einem Emitterwiderstand (R4) aus dem Material des Sensorelements erzeugt wird.

9. Verfahren zur Temperaturkompensation einer Sensoranordnung, insbesondere einer Hall-Sensoranordnung, mit einem Sensorelement, dessen Signalausgang mit dem Eingang einer Verstärkerstufe verbunden ist, und mit einer Versorgungseinrichtung, die mit dem Sensorelement verbunden
ist, **dadurch gekennzeichnet,**
daß das Sensorelement (S) und die Verstärkerstufe (V1) jeweils mit einer vorgegebenen Temperaturabhängigkeit betrieben werden, die temperaturproportional sowie invers temperaturproportional so gewählt wird, daß sich die einzelnen Temperaturabhängigkeiten am Ausgang der Verstärkerstufe kompensieren.

10. Verfahren nach Anspruch 9,
**dadurch gekennzeichnet,**
daß die Temperaturabhängigkeit mit Bezug auf die absolute Temperatur gewählt wird.

11. Verfahren nach Anspruch 10,
**dadurch gekennzeichnet,**
daß das Sensorsignal mit einem Vergleichssignal (IV2) verglichen wird, das die gleiche Temperaturabhängigkeit hat, wie das Sensorsignal.

## Claims

1. Sensor arrangement, in particular Hall-effect sensor arrangement, having a sensor element whose signal output is connected to the input of an amplifier stage, and having a supply device which is connected to the sensor element, characterized in that the supply device (VS) supplies the sensor element (S) with a supply quantity (IS), which is proportional to a predetermined temperature, and in that the transconductance of the amplifier stage (V1) is inversely proportional to the predetermined temperature.

2. Arrangement according to Claim 1,
characterized in that the absolute temperature is selected as predetermined temperature.

3. Arrangement according to Claim 1 or 2,
characterized in that the supply quantity (IS) of the sensor element (S) is a supply current whose temperature behaviour depends on the absolute temperature.

4. Arrangement according to one of Claims 1 to 3,
characterized in that the supply device (VS) contains a bandgap circuit.

5. Arrangement according to Claim 4,
characterized in that the bandgap circuit (T10, T11, R10) contains a resistor (R10) made of the material of the sensor element.

6. Sensor arrangement according to one of Claims 1 to 5,
characterized in that the sensor signal at the signal output of the sensor element is compared with a comparison signal (IV2), which has the same temperature dependence as the sensor signal.

7. Arrangement according to Claim 6,
characterized in that the comparison signal (IV2) is generated by means of an amplifier stage (D1, T5, R4), which contains, as temperature-determining element, a resistor (R4) made of the material of the sensor element.

8. Arrangement according to Claim 6 or 7,
characterized in that the comparison signal is generated with the aid of an operational amplifier (D1, SP, L1, L2) and an emitter circuit, connected downstream, with an emitter resistor (R4) made of the material of the sensor element.

9. Method for the temperature compensation of a sensor arrangement, in particular a Hall-effect sensor arrangement, having a sensor element whose signal output is connected to the input of an amplifier stage, and having a supply device which is connected to the sensor element, characterized in that the sensor element (S) and the amplifier stage (V1) are in each case operated with a predetermined temperature dependence which is selected to be proportional to temperature and also inversely proportional to temperature such that the individual temperature dependences are compensated at the output of the amplifier stage.

10. Method according to Claim 9,
characterized in that the temperature dependence is selected with regard to the absolute temperature.

11. Method according to Claim 10,
characterized in that the sensor signal is compared with a comparison signal (IV2), which has the same temperature dependence as the sensor signal.

## Revendications

1. Agencement de capteur, notamment agencement de capteur de Hall, comprenant un élément de capteur dont la sortie de signal est reliée à l'entrée d'un étage amplificateur, et comportant un dispositif d'alimentation qui est relié à l'élément de capteur, **caractérisé** en ce que le dispositif d'alimentation (VS) alimente l'élément de capteur (S) avec une grandeur d'alimentation (IS), qui est proportionnelle à une température prescrite, et en ce que la pente de montée de l'étage amplificateur (V1) est inversement proportionnelle à la température prescrite.

2. Agencement selon la revendication 1, **caractérisé** en ce qu'en guise de température prescrite on choisit la température absolue.

3. Agencement selon la revendication 1 ou 2, **caractérisé** en ce que la grandeur d'alimentation (IS) de l'élément de capteur (S) est un courant d'alimentation dont la loi de variation en fonction de la température dépend de la température absolue.

4. Agencement selon l'une des revendications 1 à 3, **caractérisé** en ce que le dispositif d'alimentation (VS) comprend un circuit bandgap.

5. Agencement selon la revendication 4, **caractérisé** en ce que le circuit bandgap (T10, T11, R10) comprend une résistance (R10) en le matériau de l'élément de capteur.

6. Agencement selon l'une des revendications 1 à 5, **caractérisé** en ce que le signal de capteur à la sortie de signal de l'élément de capteur est comparé à un signal de comparaison (IV2) qui présente la même loi de variation en fonction de la température que le signal de capteur.

7. Agencement selon la revendication 6, **caractérisé** en ce que le signal de comparaison (IV2) est engendré au moyen d'un étage amplificateur (D1, T5, R4), qui comprend, en guise d'élément de détermination de la température, une résistance (R4) en le matériau de l'élément de capteur.

8. Agencement selon la revendication 6 ou 7, **caractérisé** en ce que le signal de comparaison est engendré à l'aide d'un amplificateur opérationnel (D1, SP, L1, L2) et d'un circuit d'émetteur monté en aval, comprenant une résistance d'émetteur (R4) en le matériau de l'élément de capteur.

9. Procédé de compensation en température d'un agencement de capteur, notamment d'un agencement de capteur de Hall, comprenant un élément de capteur dont la sortie de signal est reliée à l'entrée d'un étage amplificateur, et comportant un dispositif d'alimentation qui est relié à l'élément de capteur, **caractérisé** en ce que l'on fait foncticnner l'élément de capteur (S) et l'étage amplificateur (V1), chacun selon une loi de variation en fonction de la température, prescrite, qui est choisie proportionnelle à la température ainsi qu'inversement proportionnelle à la température de façon telle que les lois de variation en fonction de la température individuelles se compensent à la sortie de l'étage amplificateur.

10. Procédé selon la revendication 9, **caractérisé** en ce que la loi de variation en fonction de la température est choisie relativement à la température absolue.

11. Procédé selon la revendication 10, **caractérisé** en ce que le signal de capteur est comparé à un signal de comparaison (IV2) qui présente ia même loi de variation en fonction de la température que le signal de capteur.
